# EUROPEAN PATENT APPLICATION

(11) **EP 4 535 876 A1**
(43) Date of publication of application: **09.04.2025**
(21) Application number: 23814621.1
(22) Date of filing: 17.01.2023
(51) Int. Cl.: H04W 48/20

(54) **NON-AP MLD COMMUNICATION METHOD AND APPARATUS, STORAGE MEDIUM AND ELECTRONIC DEVICE**

(30) Priority: 30.05.2022 CN 202210601048
(71) Applicant: ZTE Corporation, Shenzhen, Guangdong 518057 (CN)
(72) Inventor: LI, Yan, Shenzhen, Guangdong 518057 (CN); TANG, Ke, Shenzhen, Guangdong 518057 (CN); LI, Yun, Shenzhen, Guangdong 518057 (CN)
(74) Representative: Chimini, Francesco
(86) International application number: PCT/CN2023/072698
(87) International publication number: WO 2023/231422

(57) **Abstract**

The present invention provides a non-AP MLD communication method and apparatus, storage medium and electronic device. The method includes: collecting, by a distributed Multi-Link Device, MLD, controller, link information of respective links from a plurality of Access Point, AP, MLDs, wherein the respective links are links between a non-AP MLD and the plurality of AP MLDs; and selecting, by the distributed MLD controller, a targetAP MLD from the plurality of AP MLDs according to the link information of the respective links, and communicating with the non-AP MLD via the target AP MLD. The described technical solution solves the problem in the prior art that a long data communication delay is caused because in a case of AP MLDs communicate with a non-AP MLD, transmission links are adjusted relying on a conventional roaming technology.

## Description

The present invention claims priority to Chinese patent invention no. 202210601048.2, filed with the Chinese Patent Office on May 30, 2022 and entitled "Non-AP MLD Communication Method and Apparatus, Storage Medium and Electronic Device", which is incorporated herein by reference in its entirety.

### Technical Field

The present invention relates to the field of communications, and in particular to a non-AP MLD communication method and apparatus, storage medium and electronic device.

### Background

In a future home environment, smart home devices are mostly in an Access Point Multi-Link Device (AP MLD) networking scenario. In an AP MLD networking scenario, when AP MLDs communicate with a non-Access Point Multi-Link Device (non-AP MLD), transmission links need to be adjusted in a roaming manner. The non-AP MLD needs to perform operations such as disassociation, re-association, and four-way handshake when roaming. These operations cause a data communication delay of 50 ms or more. However, the seventh-generation wireless network communication technology, Wi-Fi 7 technology, requires the data communication delay to be controlled within 5 ms. Therefore, the conventional roaming technology has not met the technical requirements of Wi-Fi 7.

It can be determined that, in an AP MLD networking scenario, using a conventional roaming method to adjust transmission links during communications between the AP MLDs and the non-AP MLD results in a data communication delay not meeting the technical requirements of Wi-Fi 7. However, the prior art can only rely on the conventional roaming technology to adjust the transmission links during communications between the AP MLDs and the non-AP MLD.

With regard to the problem in the prior art that a long data communication delay is caused because when AP MLDs communicate with a non-AP MLD, transmission links are adjusted relying on a conventional roaming technology, no effective solution has been provided currently.

Therefore, there is a need for improvements in the related art to overcome the described defect in the related art.

### Summary

The present invention provide a non-AP MLD communication method and apparatus, storage medium and electronic device, so as to at least solve the problem in the prior art that a long data communication delay is caused because when AP MLDs communicate with a non-AP MLD, transmission links are adjusted relying on a conventional roaming technology.

According to one aspect of the present invention, a non-AP MLD communication method is provided. The non-AP MLD communication method includes: a distributed MLD controller collects link information of respective links from AP MLDs, wherein the respective links are links between a non-AP MLD and a plurality of AP MLDs; and the distributed MLD controller selects a target AP MLD from the plurality of AP MLDs according to the link information of respective links, and communicates with the non-AP MLD via the target AP MLD.

According to yet another aspect of the present invention, a non-AP MLD communication device is further provided. The non-AP MLD communication device includes: a management module, configured to collect link information of respective links from AP MLDs, wherein the respective links are links between a non-AP MLD and a plurality of AP MLDs; the management module is configured to select a target AP MLD from the plurality of AP MLDs according to the link information of respective links, and communicate with the non-AP MLD via the target AP MLD.

According to the present invention, a distributed MLD controller collects link information of respective links between a non-AP MLD and a plurality of AP MLDs from the AP MLDs, selects a target AP MLD from the plurality of AP MLDs according to the link information, and communicates with the non-AP MLD via the target AP MLD. The described technical solution collects link information of respective links between a non-AP MLD and a plurality of AP MLDs, and then selects an optimal AP MLD from the plurality of AP MLDs in real time according to the link information, and takes the link between said AP MLD and the non-AP MLD as a transmission link, such that the transmission links are adjusted in a non-roaming manner, thereby avoiding the problem of delay caused by the adjustment of the transmission links relying on roaming. Accordingly, the described technical solution can solve the problem in the prior art that a long data communication delay is caused because when AP MLDs communicate with a non-AP MLD, transmission links are adjusted relying on a conventional roaming technology.

### Brief Description of the Drawings

The drawings described herein are intended to provide further understanding of the present invention, and form a part of the present invention. The present invention and the description thereof are used to explain the present invention, and do not form improper limits to the present invention. In the drawings:
Fig. 1 is a hardware structural block diagram of an alternative computer terminal for a non-AP MLD communication method according to an embodiment of the present invention;
Fig. 2 is a schematic diagram of a conventional data roaming flow in the related art;
Fig. 3 is an architecture diagram of a Multi-Link Device (MLD) in the related art;
Fig. 4 is a flowchart of an alternative non-AP MLD communication method according to an embodiment of the present invention;
Fig. 5 is an architecture diagram of an alternative distributed MLD according to an embodiment of the present invention;
Fig. 6 is a flowchart of alternative establishment and maintenance of a distributed MLD according to an embodiment of the present invention;
Fig. 7 is a flowchart of alternative Distributed MLD Service Management according to an embodiment of the present invention;
Fig. 8 is a schematic diagram of alternative data communications performed by a non-AP MLD via link1 according to Example 1 of the present invention;
Fig. 9 is a schematic diagram of alternative data communications performed by a non-AP MLD via link2 according to Example 1 of the present invention;
Fig. 10 is a schematic diagram of alternative data communications performed by a non-AP MLD via link2 according to Example 1 of the present invention;
Fig. 11 is a schematic diagram of alternative data communications performed by a non-AP MLD via link1 according to Example 2 of the present invention;
Fig. 12 is a schematic diagram of alternative multi-link transmission by AP MLD1 via link1 and link3 according to Example 2 of the present invention;
Fig. 13 is a schematic diagram of alternative multi-link transmission by AP MLD1 via link1, link2 and link3 according to Example 2 of the present invention;
Fig. 14 is a schematic diagram of alternative multi-link communications between AP MLDs and a non-AP MLD according to Example 3 of the present invention;
Fig. 15 is a schematic diagram of alternative transmission links reduced from link1, link2 and link3 to link1 and link3 according to Example 3 of the present invention;
Fig. 16 is a schematic diagram of alternative transmission links switched from link1 and link3 to link2 according to Example 3 of the present invention;
Fig. 17 is a schematic diagram of an alternative switching between a distributed MLD mode and a conventional MLD mode according to Example 4 of the present invention;
Fig. 18 is a structural block diagram (I) of an alternative non-AP MLD communication device according to an embodiment of the present invention; and
Fig. 19 is a structural block diagram (II) of an alternative non-AP MLD communication device according to an embodiment of the present invention.

### Detailed Description of the Embodiments

In order to make persons skilled in the art better understand the solutions of the present invention, the following clearly and completely describes the technical solutions in the present invention with reference to the drawings in the present invention. Apparently, the described embodiments are merely some of rather than all of the present invention. All other embodiments obtained by persons of ordinary skill in the art based on the present invention without inventive efforts shall belong to the scope of protection of the present invention.

It should be noted that, terms such as "first" and "second" in the description and the claims of the present invention and the described drawings are used to distinguish similar objects, but are not necessarily used to describe a specific sequence or order. It should be understood that the data so used may be interchanged where appropriate such that the present invention described herein can be implemented in sequences other than those illustrated or described herein. In addition, the terms "include" and "have", and any variations thereof, are intended to cover a non-exclusive inclusion, for example, a process, method, system, product, or apparatus that includes a series of steps or units is not necessarily limited to those steps or units that are expressly listed, but may include other steps or units that are not expressly listed or inherent to such process, method, product, or apparatus.

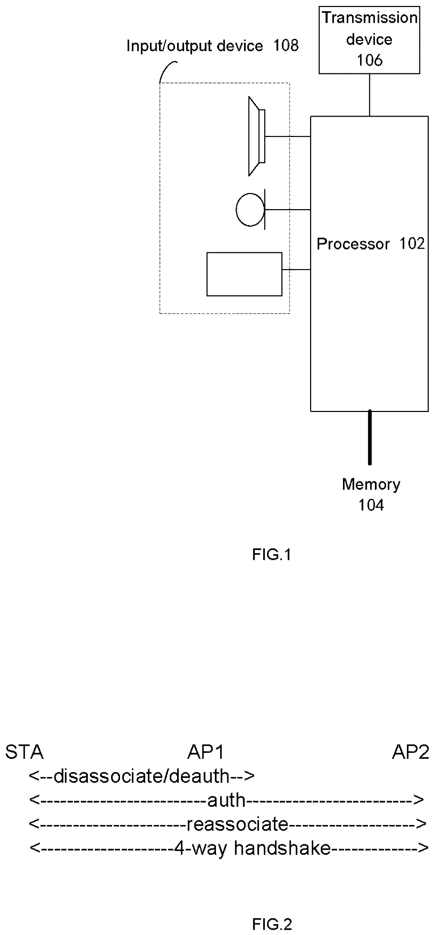

The method embodiments provided in the present invention may be implemented in a computer terminal or a similar computing device. Taking running on a computer terminal as an example, Fig. 1 is a hardware structural block diagram of an alternative computer terminal for a non-AP MLD communication method according to an embodiment of the present invention. As shown in Fig. 1, the computer terminal may include one or more (only one is shown in Fig. 1) processors 103 (the processors 103 may include, but are not limited to, a Microprocessor Unit (MPU) or a Programmable Logic Device (PLD)) and a memory 104 for storing data. In an embodiment, the computer terminal may further include a transmission device 106 and an input/output device 108 for a communication function. A person of ordinary skill in the art may understand that the structure shown in Fig. 1 is merely exemplary, which does not limit the structure of the computer terminal. For example, the computer terminal may further include components more or less than that shown in Fig. 1, or have functions equivalent to that shown in Fig. 1, or have different configurations bringing about functions more than that shown in Fig. 1.

The memory 104 may be configured to store a computer program, for example, a software program and a module of invention software, such as a computer program corresponding to the non-AP MLD communication method in the present invention. The processor 103 runs the computer program stored in the memory 104, so as to execute respective function inventions and data processing, i.e. to implement the described method. The memory 104 may include a high-speed random access memory, and may also include a non-volatile memory, such as one or more magnetic storage apparatuses, flash memory, or other non-volatile solid-state memory. In some examples, the memory 104 may further include a memory configured remotely relative to the processor 103, and the remote memory may be connected to the computer terminal over a network. Examples of the described network include, but are not limited to, the Internet, intranets, local area networks, mobile communication networks, and combinations thereof.

The transmission device 106 is configured to receive or transmit data via a network. Specific examples of the described network may include a wireless network provided by a communication provider of the computer terminal. In an example, the transmission device 106 includes a Network Interface Controller (NIC) that may be coupled to other network devices via a base station to communicate with the Internet. In an example, the transmission device 106 may be a Radio Frequency (RF) module configured to wirelessly communicate with the Internet.

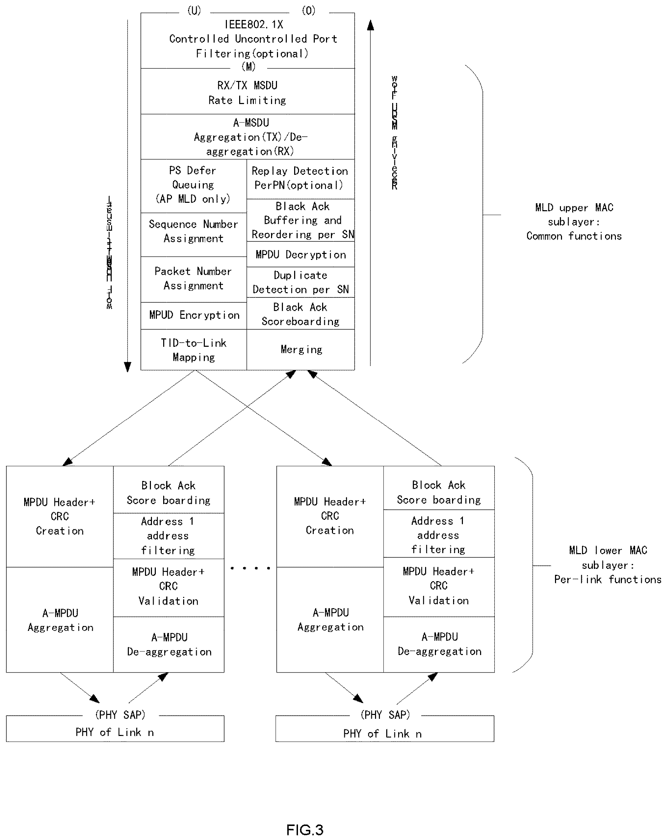

Next, the related technologies in the present invention will be described:
Roaming: as shown in Fig. 2, Fig. 2 is a schematic diagram of a conventional data roaming flow in the related art. In Fig. 2, the conventional data roaming flow includes a process from disabling association between a Station STA and a first wireless access point API to re-establishing association between the STA and a second wireless access point AP2. In the technical evolution process of Wi-Fi, technologies, such as BSS Transition Management (BTM, wherein BSS refers to a basic service set) of 802.11V, fast roaming of 802.11r, and Fast Initial Link Set Up (FILS) of 802.11ai, have been provided to improve roaming experience, and their respective invention scenarios are different. In the perspective of roaming delay, the technology closest to Wi-Fi technology is fast roaming of 802.11r, and fast roaming of 802.11r can control the roaming delay to about 50 ms. The present invention focuses on the fast roaming technology of 802.11r.
Multi-link: Multi-Link Operation (MLO) provided in current 802.11be is an important technical direction of Wi-Fi 7 in the future, and multi-link transmission shows impressive performance in aspects such as improvement of throughput, reduction of delay, and interference resistance. A Multi-Link Device (MLD) is a device having an MLO function. As shown in Fig. 3, Fig. 3 is an architecture diagram of an MLD in the related art. In Fig. 3, a Media Access Control (MAC) layer function is divided as follows: framing details relating to a Mac Protocol Data Unit (MPDU) and a frame aggregation function of an Aggregation Medium Access Control Protocol Data Unit (A-MPDU) are divided into an MLD lower MAC sublayer, and other MAC functions are divided into an MLD upper MAC sublayer. In particular, a traffic ID to link mapping information TID-to-link mapping module in the upper MAC sublayer is used to implement the specific transmission path of data and management frames, i.e. implement transmission of management and data frames via a certain Link.

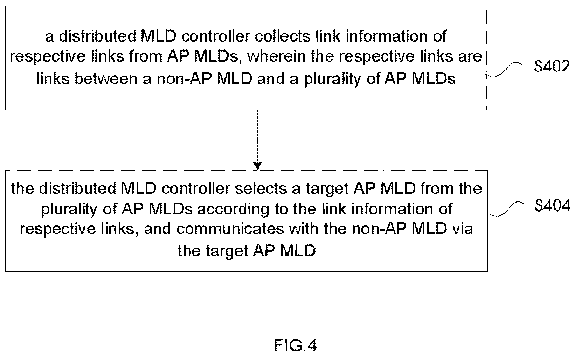

Fig. 4 is a flowchart of an alternative non-AP MLD communication method according to an embodiment of the present invention, which is applied to a distributed MLD controller. As shown in Fig. 4, the non-AP MLD communication method includes the following steps:
step S402: a distributed MLD controller collects link information of respective links from AP MLDs, wherein the respective links are links between a non-AP MLD and a plurality of AP MLDs; and
step S404: the distributed MLD controller selects a target AP MLD from the plurality of AP MLDs according to the link information of respective links, and communicates with the non-AP MLD via the target AP MLD.

According to the described steps, a distributed MLD controller collects link information of links between a non-AP MLD and a plurality of AP MLDs from the AP MLDs, selects a target AP MLD from the plurality of AP MLDs according to the link information, and communicates with the non-AP MLD via the target AP MLD. The described technical solution collects link information of links between a non-AP MLD and a plurality of AP MLDs, and then selects an optimal AP MLD from the plurality of AP MLDs in real time according to the link information, and takes the link between said AP MLD and the non-AP MLD as a transmission link, such that the transmission links are adjusted in a non-roaming manner, thereby avoiding the time delay problem caused by the adjustment of the transmission links relying on roaming. Accordingly, the described technical solution can solve the problem in the prior art that a long data communication delay is caused because when AP MLDs communicate with a non-AP MLD, transmission links are adjusted relying on a conventional roaming technology.

It should be noted that the distributed MLD controller is distributed in a PON chip.

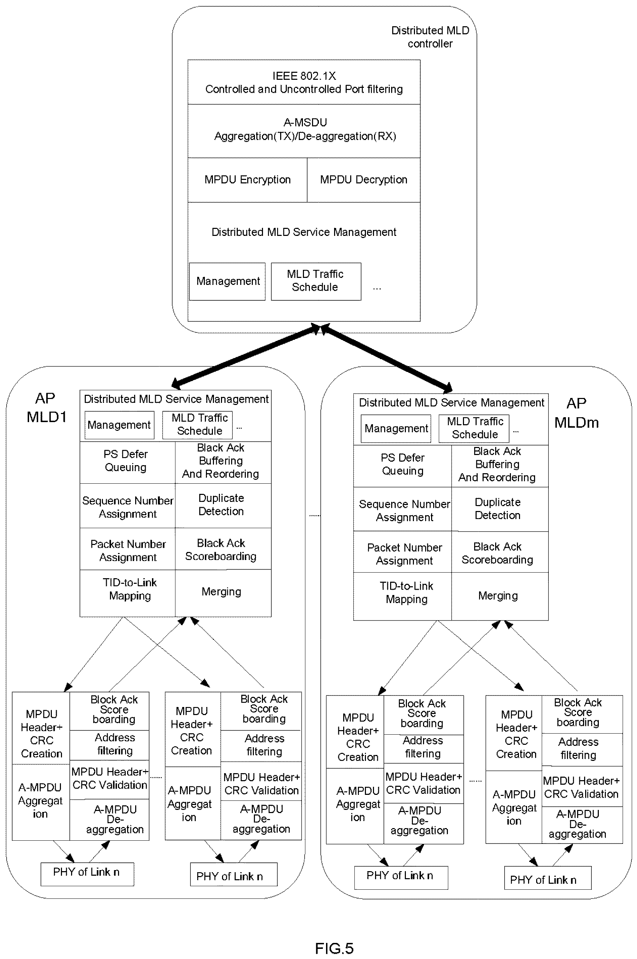

To help understand the present invention, a distributed MLD architecture is first described. Fig. 5 is an architecture diagram of an alternative distributed MLD according to an embodiment of the present invention. In Fig. 5, in an original AP MLD architecture, an IEEE 802.1x protocol (access control function), A-MSDU frame aggregation, and MPDU frame encryption (key management) that are located in an MLD mac upper sublayer are moved up to a distributed MLD controller chip of a home distributed MLD controller device; the rest of the architecture of MLDs is kept unchanged. In particular, a Distributed MLD Service Management function is newly added to a distributed MLD controller chip and an AP MLD, which includes, but is not limited to, a Management module and an MLD Traffic Schedule module, and is configured to guide communication between the distributed MLD controller and a target AP MLD, and implement scheduling management of data and management information for a plurality of AP MLDs.

In the original MLD architecture, one or more of IEEE 802.1x (access control function), A-MSDU frame aggregation, and MPDU frame encryption (key management) that are located in an MLD mac upper sublayer may be selected to be moved up to a distributed MLD controller chip of a home distributed MLD controller device. The up movement of IEEE 802.1x can enhance management and control capabilities of the distributed MLD controller chip. The MSDU frame aggregation can improve transmission efficiency of transmission paths. The MPDU frame encryption can replace the transmission path encryption, and can be used for interchange of key information between the distributed MLD controller and a plurality of AP MLDs.

The following embodiments include two parts: part 1 is establishment and maintenance of distributed MLD, and part 2 is Distributed MLD Service Management flow.

### Part 1: Establishment and Maintenance of Distributed MLD

In an embodiment, before collecting link information of respective links from the AP MLDs, the distributed MLD controller receives a unicast or broadcast discovery request message sent by each AP MLD, and identifies the role of each AP MLD; and the distributed MLD controller replies with or actively sends a discovery response based on the discovery request message to announce role information of the distributed MLD controller.

It should be noted that, an AP MLD announces that its role is a multi-link device by sending a unicast or broadcast discovery request message. In this embodiment, the role of the distributed MLD controller is a multi-link device group manager.

In an embodiment, before collecting link information of respective links from the AP MLDs, the distributed MLD controller receives a join request message sent by each AP MLD, and collects and maintains multi-link information carried in the join request message; and the distributed MLD controller replies to the join request message with a join response message acceptance message, or rejects each AP MLD from joining a Distributed MLD group.

In an embodiment, before collecting link information of respective links from the AP MLDs, the distributed MLD controller receives a notification message sent by each AP MLD, and updates and maintains multi-link information carried in the notification message.

In an embodiment, before collecting link information of respective links from the AP MLDs, the distributed MLD controller sends a unicast or broadcast configuration request message, wherein the configuration request message carries link information of the plurality of maintained AP MLDs, and requests each AP MLD to modify the configuration of each AP MLD according to the link information.

In an embodiment, before collecting link information of respective links from the AP MLDs, the distributed MLD controller receives data and management messages sent by each AP MLD; and/or the distributed MLD controller sends data and management messages to each AP MLD.

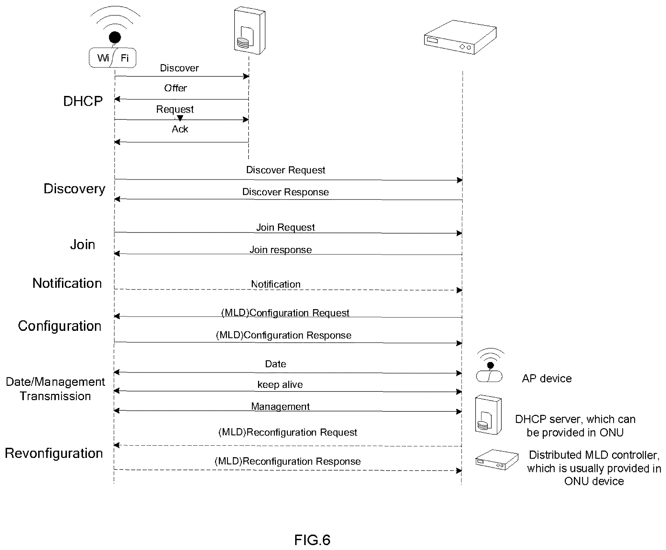

To help understand the described embodiments, the complete flow of the establishment and maintenance of a distributed MLD is further described in the following. Fig. 6 is a flowchart of alternative establishment and maintenance of a distributed MLD according to an embodiment of the present invention. As shown in Fig. 6, the flow of the establishment and maintenance of a distributed MLD includes:
Dynamic Host Configuration Protocol (DHCP) phase: an AP MLD device initiates registration to a DHCP server via its Multi-Link Device Medium Access Control (MLD MAC), acquires an Internet Protocol (IP) address, and sets the address to be used for subsequent communication.
Discovery phase: an AP MLD and a distributed MLD controller discover each other via a certain mechanism, which prepares for establishment of a subsequent MLD group, wherein the described certain mechanism can be understood as the following flow:
   Distributed MLD Controller:
      it is supported to receive a unicast or broadcast discovery request message sent by an AP MLD, and identify the role (multi-link device) of a sending end; and it is supported to reply with or actively send a discovery response based on the discovery request message to announce its role information (multi-link device group manager).
   AP MLD end: it is supported to send a unicast or broadcast discovery request message to announce its role (multi-link device) and search for a multi-link device group manager, and it is supported to receive a discovery response message and identify the role of the sending end.
   Join phase: an AP MLD sends its own link information and the like to the distributed MLD controller, and the distributed MLD controller determines whether to add the AP MLD to the distributed MLD group.
   Notification phase: when the link information of an AP MLD changes, the AP MLD sends a notification to notify the distributed MLD controller of the change. For example, the AP MLD originally supports three links, but currently only two links can be supported due to some reasons. In this case, the AP MLD needs to send a notification to notify the distributed MLD controller of the change of the related information.
   Configuration phase: the distributed MLD controller integrates respective pieces of link information of all AP MLDs added to the MLD group, and configures these pieces of information to the AP MLDs, and each AP MLD needs to carry link information of other AP MLDs in a subsequent capability announcement and operation process. Therefore, from the non-AP MLD perspective, the distributed MLD group is a generalized MLD.

For example, there are AP MLD1 (link1, link2, link3), AP MLD2 (link4, link5, link6), and AP MLD3 (link7, link8) in a distributed MLD group. A conventional AP MLD only carries its own multi-link information in a beacon frame, for example, AP MLD1 only carries information of link1, link2 and link3. However, in the distributed MLD, AP MLD1 needs to carry information of link1-link8. From the non-AP MLD perspective, the distributed MLD is an independent AP MLD device having eight links ranging from link1 to link8.

Data Transmission/Management Transmission phase: the establishment of data and management channels between an AP MLD and a distributed MLD controller is completed, and the distributed MLD controller on the data channel performs scheduling via its own Traffic Schedule module for data communication with the AP MLD; the distributed MLD controller on the management channel periodically collects link information of respective APs, and the change of the link information of each AP may actively trigger reporting.

Reconfiguration phase: when the distributed MLD controller learns that the link information of a certain AP MLD changes, it is triggered to reconfigure the link information of each AP MLD.

### Second part: Distributed MLD Service Management Flow.

In an embodiment, the distributed MLD controller is configured with a Distributed MLD Service Management function, and each AP MLD is configured with the Distribution MLD Service Management function.

It should be noted that, the distributed MLD Service Management function includes, but is not limited to, guiding communication between the distributed MLD controller and a target AP MLD. Further, the core technical point of the present invention is: Distributed MLD Service Management function. In the present invention, dynamic adjustment of a target AP MLD and an associated link is implemented by means of periodical link information collection, and finally, the non-AP MLD completes the adjustment of the transmission links in a non-roaming manner, and a transmission delay is reduced from 50 ms or more originally required for roaming to be within 1 ms selected by flow scheduling. The Distributed MLD Service Management function can be implemented via a Management module and an MLD Traffic Schedule module, etc., wherein the Management module is responsible for the establishment of the Distributed MLD group and the management of information maintenance, and is responsible for the implementation of functions such as association information, periodical link information, target AP MLD selection and link switching and the management of link maintenance, and the MLD Traffic Schedule is responsible for the management and maintenance of the data links between the distributed MLD controller and the AP MLD end.

In an embodiment, the distributed MLD controller receives a multi-link association request that is forwarded by each AP MLD and sent by the non-AP MLD, wherein the multi-link association request is used to indicate a plurality of links associated with the non-AP MLD; and the distributed MLD controller replies to the multi-link association request with an acceptance message or a rejection message, and when replying with the rejection message, sends recommended multi-link information to the non-AP MLD, so as to instruct the non-AP MLD to re-initiate a multi-link association request according to the multi-link information.

In an embodiment, the distributed MLD controller periodically sends a link measurement request to the plurality of AP MLDs; and the distributed MLD controller receives the link information of respective links sent by the plurality of AP MLDs based on the link measurement request.

Alternatively, in this embodiment, a link measurement request may be periodically sent to the plurality of AP MLDs via Management of the distributed MLD controller, so as to request the plurality of AP MLDs to collect link information of respective links, wherein the link information includes but is not limited to an operation type, a channel number, a physical negotiation rate, a real-time rate, signal strength of a non-AP MLD, and neighboring information.

In an embodiment, data is scheduled via an MLD traffic schedule module in the distributed MLD controller, so as to guide the target AP MLD to communicate with the non-AP MLD.

In an embodiment, upon detection of a change in the link information, the method further includes at least one of the following: the distributed MLD controller guides a target sub-STA in the non-AP MLD to roam, so as to implement link switching; and the distributed MLD controller selects a new target AP MLD, so as to guide the new target AP MLD to communicate with the non-AP MLD.

It should be noted that, in this embodiment, when the link quality of the non-AP MLD changes, the distributed MLD controller has the following two options: (1) guiding a certain sub-STA in the non-AP MLD to roam, so as to implement link switching, that is, the distributed MLD controller guides the non-AP MLD to connect to a recommended a link; and (2) the distributed MLD controller selects a new target AP MLD, and guides the new target AP MLD to communicate with the non-AP MLD via the MLD Traffic Schedule module.

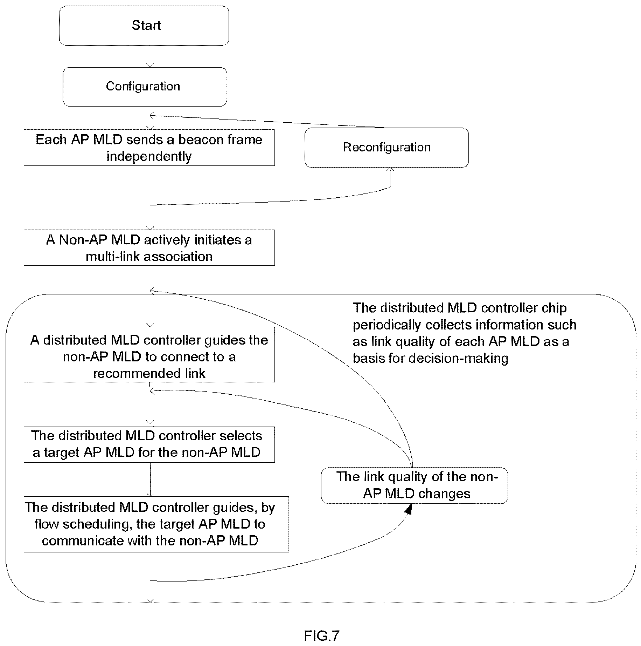

To help understand the described embodiments, the complete flow of the establishment and maintenance of a distributed MLD is further described in the following. Fig. 7 is a flowchart of alternative Distributed MLD Service Management according to an embodiment of the present invention. As shown in Fig. 7, the flow of the Distributed MLD Service Management includes:
step 1: link information of a distributed MLD is updated by means of configuration and reconfiguration flows, and for details, reference may be made to the Configuration phase and the reconfiguration phase in the flow of the establishment and maintenance of a distributed MLD.
Step 2: the beacon frame sent independently by each AP MLD contains information of all links in the distributed MLD.
Step 3: when the non-AP MLD actively initiates a multi-link association, as the non-AP MLD cannot sense that multiple links are distributed in different AP MLDs, it may be unreasonable to request to associate the links.
Step 4: the distributed MLD controller guides the non-AP MLD to connect to the recommended link, the distributed MLD controller periodically collects link information of AP MLDs, selects the recommended link according to the AP MLDs, and guides the non-AP MLD to connect to the recommended link.
Step 5: the distributed MLD controller selects a target AP MLD for the non-AP MLD: when the non-AP MLD is multi-link associated with different AP MLDs, the distributed MLD controller selects a unique target AP MLD at a time to communicate with the non-AP MLD.
Step 6: when the link quality of the non-AP MLD changes, the distributed MLD controller has the following two options:
   (1) guiding a certain sub-STA in the non-AP MLD to roam, so as to implement link switching, that is, the distributed MLD controller guides the non-AP MLD to connect to a recommended a link; and
   (2) the distributed MLD controller selects a new target AP MLD, and guides the new target AP MLD to communicate with the non-AP MLD via the MLD Traffic Schedule module.

The present invention constructs an architecture based on a distributed MLD scheme. The described embodiments introduce how a distributed MLD controller end executes the distributed MLD scheme of the present invention. The following embodiments introduce how the other end-AP MLD executes the scheme:
The following embodiments include two parts: part 1 is establishment and maintenance of distributed MLD, and part 2 is Distributed MLD Service Management flow.

### Part 1: Establishment and Maintenance of Distributed MLD

In an example embodiment, an AP MLD sends a unicast or broadcast discovery request message to announce its role as a multi-link device and to search for a multi-link device group manager, and receives a discovery response message and identifies role information of the sending end of the discovery response.

In an embodiment, the AP MLD sends a join request message, wherein the join request message carries its own multi-link information; the AP MLD receives a join response message and identifies whether the request to join the Distributed MLD group is accepted.

In an embodiment, when the multi-link information of an AP MLD changes, a notification message is actively sent, and this message is used to notify the distributed MLD controller of the updated multi-link information.

In an embodiment, the AP MLD receives a unicast or broadcast configuration request, and identifies link information carried in the configuration request; the AP MLD replies to the configuration request message with a configuration response message to accept or reject the request of information configuration; if the request is accepted, local link information needs to be updated with the received link information, and the updated link information is carried in a subsequent beacon frame, etc.

In an embodiment, the AP MLD receives a unicast or broadcast reconfiguration request, and identifies link information carried in the reconfiguration request; the AP MLD replies to the reconfiguration request message with a reconfiguration request message to accept or reject the request of information configuration; if the request is accepted, local link information needs to be updated with the received link information, and the updated link information is carried in a subsequent beacon frame, etc.

In an embodiment, the AP MLD receives the data and management messages sent by the distributed MLD controller and sends the data and management messages to the distributed MLD controller.

### Second part: Distributed MLD Service Management Flow.

In an embodiment, an AP MLD forwards a multi-link association request sent by the non-AP MLD to the distributed MLD controller, receives an association response message replied by the distributed MLD controller to the multi-link association request, and forwards same to the non-AP MLD; when the response message carries the recommended link information, the non-AP MLD may carry the recommended link information to re-initiate a multi-link association request.

In an embodiment, the AP MLD receives a link measurement request sent by the distributed MLD controller, and reports link quality information in real time, wherein the link quality information includes but is not limited to an operation type, a channel number, a physical negotiation rate, a real-time rate, signal strength of a non-AP MLD, and neighboring information.

In an example embodiment, the AP MLD supports communication between a local AP MLD and a non-AP MLD guided by the distributed MLD controller.

In an example embodiment, the AP MLD supports guiding to complete link switching for a specified link of the non-AP MLD in a roaming manner or the like triggered by the distributed MLD controller.

The described embodiments solve the problem in the prior art that a long data communication delay is caused because when AP MLDs communicate with a non-AP MLD, transmission links are adjusted relying on a conventional roaming technology. In order to solve this technical problem, (1) the present invention constructs an architecture based on a distributed MLD scheme, and moves an IEEE 802.1x protocol (access control function), A-MSDU frame aggregation, and MPDU frame encryption (key management) that are located in an MLD mac upper sublayer up to a distributed MLD controller chip of a home distributed MLD controller device. In particular, a Distributed MLD Service Management function is newly added to a distributed MLD controller chip and an AP MLD, this function implements scheduling management of data and management information for a plurality of AP MLDs, and this function includes, but is not limited to, a Management module and an MLD Traffic Schedule module. (2) The present invention constructs a distributed MLD flow, and describes flows such as establishment of a distributed MLD group, MLD configuration, and data transmission. (3) The present invention executes a Distributed MLD Service Management process, and describes that a distributed MLD controller implements a target AP MLD selection and flow scheduling function for a specified Non-AP MLD via this flow, thereby avoiding a roaming operation and reducing a delay.

### Example 1

In this embodiment, three sub-STAs of a non-AP MLD are associated with one sub-AP in three AP MLDs.

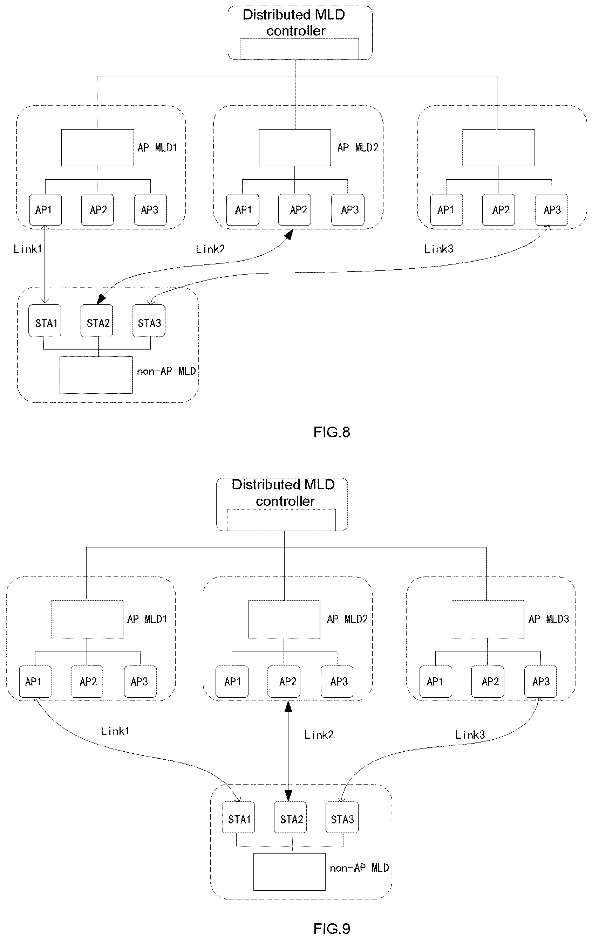

As shown in Fig. 8, Fig. 8 is a schematic diagram of alternative data communications performed by a non-AP MLD via link1 according to Example 1 of the present invention. In Fig. 8, when a non-AP MLD is in the vicinity of AP MLD1, a distributed MLD controller determines that a target AP for the non-AP MLD is AP MLD1 by periodically collecting link information of APs, and then the distributed MLD controller schedules a data flow to AP MLD1 via an MLD traffic schedule module, so as to implement data communications of the non-AP MLD via link1.

As shown in Fig. 9, Fig. 9 is a schematic diagram of alternative data communications performed by a non-AP MLD via link2 according to Example 1 of the present invention. In Fig. 9, when a non-AP MLD moves to the vicinity of AP MLD2, a distributed MLD controller determines that a target AP for the non-AP MLD is AP MLD2 by collecting link information of APs, and then the distributed MLD controller schedules a data flow to AP MLD2 via an MLD traffic schedule module, so as to implement data communications of the non-AP MLD via link2.

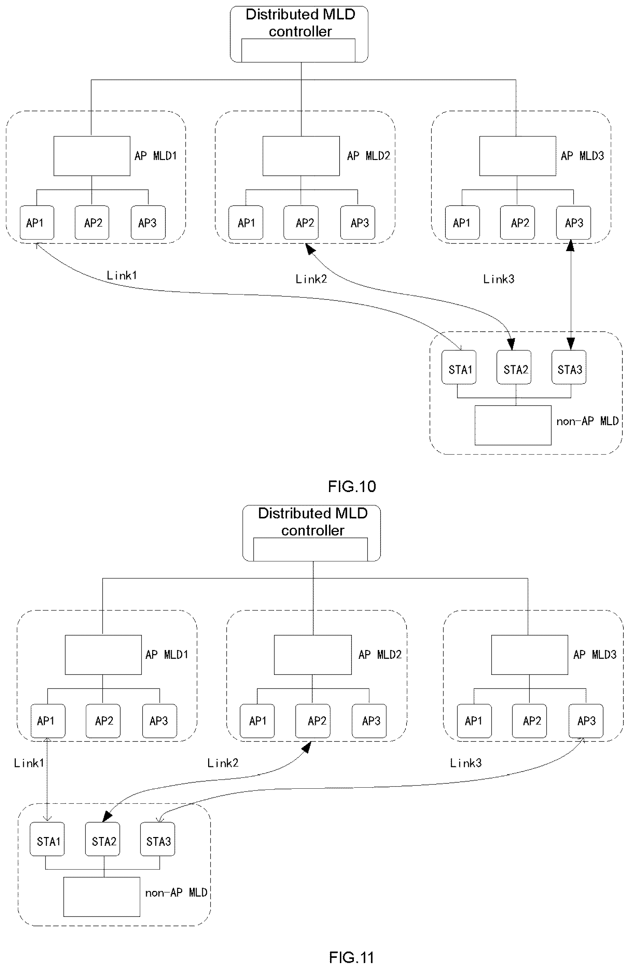

As shown in Fig. 10, Fig. 10 is a schematic diagram of alternative data communications performed by a non-AP MLD via link2 according to Example 1 of the present invention. In Fig. 10, when a non-AP MLD continues to move to the vicinity of AP MLD 3, a distributed MLD controller determines that a target AP for the non-AP MLD is AP MLD3 by collecting link information of APs, and then the distributed MLD controller schedules a data flow to AP MLD3 via an MLD traffic schedule module, so as to implement data communications of the non-AP MLD via link3.

According to this embodiment, in the process of movement of a non-AP MLD, a distributed MLD controller schedules the AP MLD with the best link quality in real time to communicate with the non-AP MLD, thereby avoiding the problem of delay introduced by the improvement of link quality requiring roaming originally.

### Example 2

In this embodiment, three sub-STAs of a non-AP MLD are associated with one sub-AP in three AP MLDs.

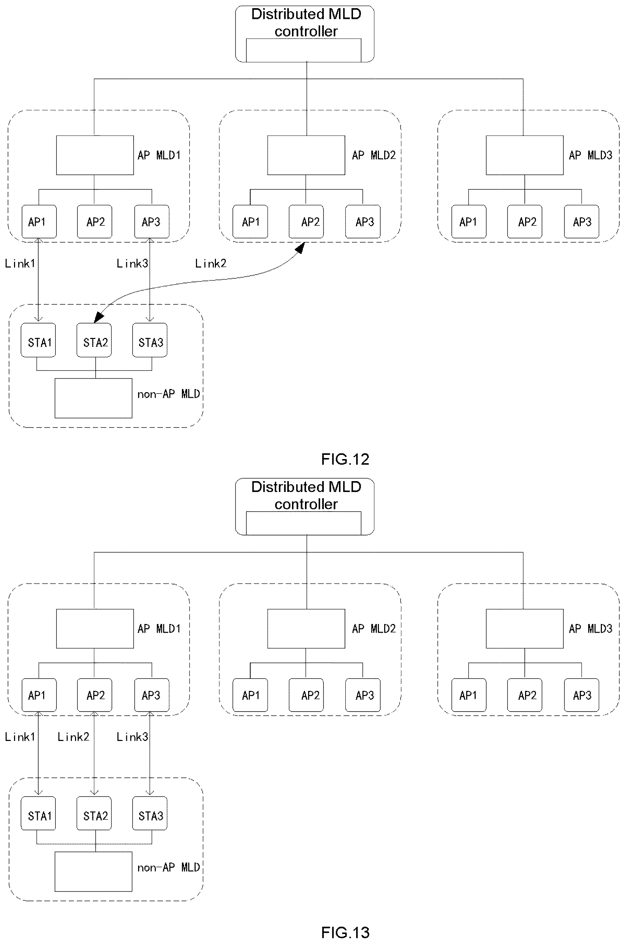

As shown in Fig. 12, Fig. 12 is a schematic diagram of alternative data communications performed by a non-AP MLD via link1 according to Example 2 of the present invention. In Fig. 12, when a non-AP MLD is in the vicinity of AP MLD1, a distributed MLD controller determines that a target AP for the non-AP MLD is AP MLD1 by periodically collecting link information of APs, and then the distributed MLD controller schedules a data flow to AP MLD1 via an MLD traffic schedule module, so as to implement data communications of the non-AP MLD via link1.

As shown in Fig. 12, Fig. 12 is a schematic diagram of alternative multi-link transmission by AP MLD1 via link1 and link3 according to Example 2 of the present invention. In Fig. 12, when a non-AP MLD is stable in the vicinity of AP MLD1, a distributed MLD controller determines to switch link3 with poor link quality to AP MLD1 in a roaming manner by periodically collecting link information of APs, such that AP MLD1 can implement the multi-link transmission of link1 and link3.

As shown in Fig. 13, Fig. 13 is a schematic diagram of alternative multi-link transmission by AP MLD1 via link1, link2 and link3 according to Example 2 of the present invention. In Fig. 13, when a non-AP MLD is continuously stable in the vicinity of AP MLD1, a distributed MLD controller determines to switch link2 with poor link quality to AP MLD1 in a roaming manner by periodically collecting link information of APs, such that AP MLD1 can implement the multi-link transmission of link1, link2 and link3, which is converted into a conventional MLD scenario, and has advantages of conventional Multi-link such as high throughput and low delay.

### Example 3

In this embodiment, three sub-STAs of a non-AP MLD are associated with three sub-APs of AP MLD1, respectively.

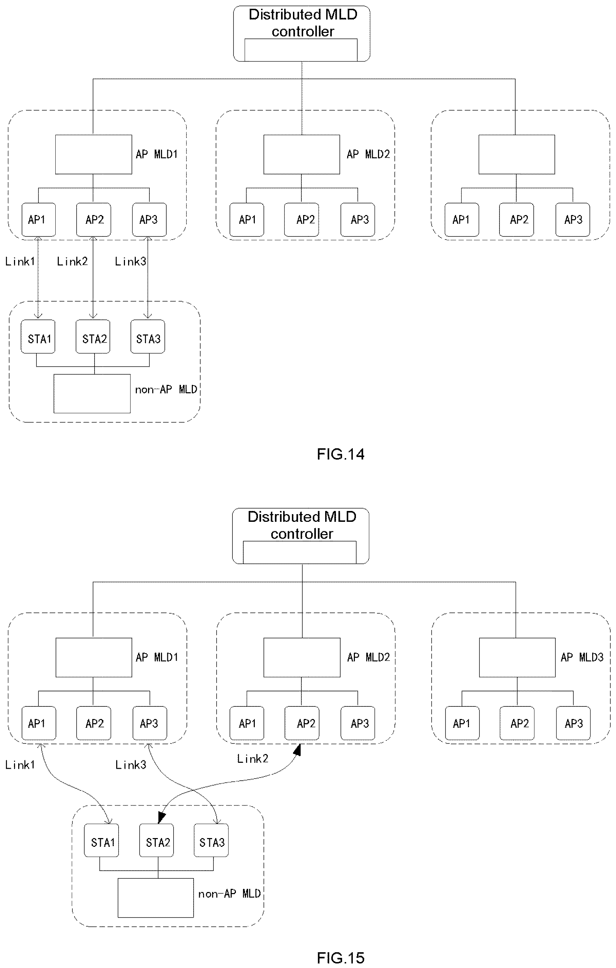

As shown in Fig. 14, Fig. 14 is a schematic diagram of alternative multi-link communications between AP MLDs and a non-AP MLD according to Example 3 of the present invention. This is a working scenario of a conventional MLD. A distributed MLD controller schedules AP MLD1 via an MLD Traffic Schedule module to communicate with a non-AP MLD, wherein AP MLD1 implements multi-link communications with the non-AP MLD via three links, i.e. link1, link2 and link3.

As shown in Fig. 15, Fig. 15 is a schematic diagram of alternative transmission links reduced from link1, link2 and link3 to link1 and link3 according to Example 3 of the present invention. In Fig. 15, when a non-AP MLD moves to be between AP MLD1 and AP MLD2, a distributed MLD controller determines the position of the non-AP MLD relative to each AP MLD by periodically collecting link information of APs, and determines sub-STA2 of the non-AP MLD suitable for roaming; then the distributed MLD controller triggers a roaming operation, and guides, via AP2 of AP MLD2, STA2 of the non-AP MLD to roam to AP2 of AP MLD2; the current transmission links are link1 and link3 (from the non-AP MLD perspective, the transmission links are reduced from link1, link2 and link3 to link1 and link3, and no delay problem caused by roaming operation occurs).

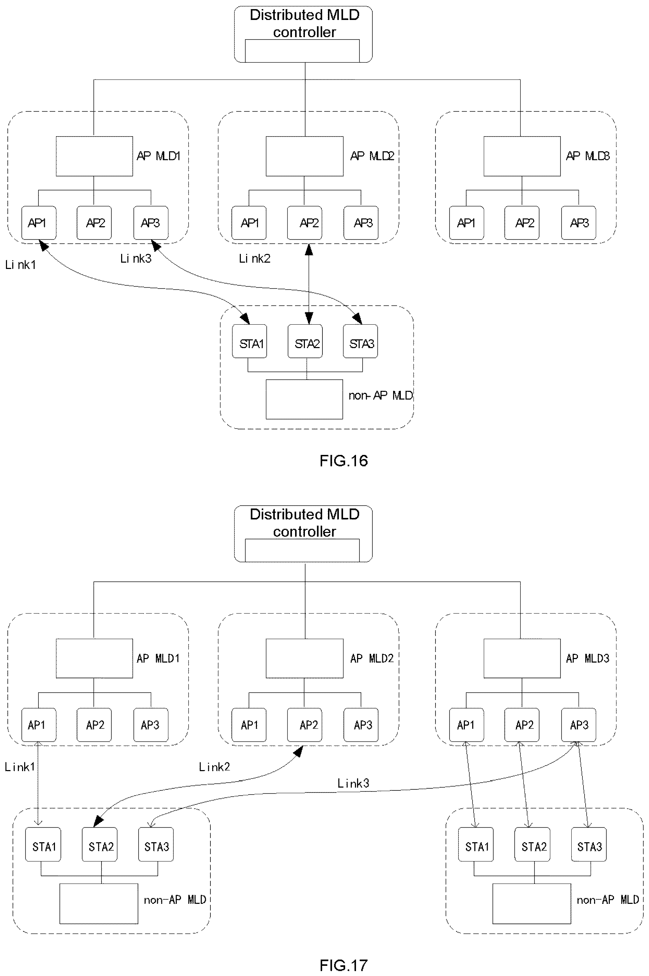

As shown in Fig. 16, Fig. 16 is a schematic diagram of alternative transmission links switched from link1 and link3 to link2 according to Example 3 of the present invention. In Fig. 16, transmission links are switched from link1 and link3 to link2. When a non-AP MLD continues to be far away from AP MLD1 and moves to the vicinity of AP MLD2, a distributed MLD controller determines the position of the non-AP MLD relative to each AP MLD by periodically collecting link information of APs, and schedules AP MLD2 via an MLD Traffic Schedule module to communicate with the non-AP MLD; the current transmission link is link2 (from the non-AP MLD perspective, the transmission links are switched from link1 and link3 to link2, and the delay of several milliseconds caused by traffic scheduling is far less than the delay of fifty milliseconds or more of roaming operation).

In this embodiment, by replacing the original full link roaming operation with previous partial link roaming and subsequent traffic scheduling, the roaming delay is significantly reduced, and the only cost is the reduction of the throughput limit caused by the previous partial link roaming, thus making it acceptable in most invention scenarios.

### Example 4

As shown in Fig. 17, Fig. 17 is a schematic diagram of an alternative switching between a distributed MLD mode and a conventional MLD mode according to Example 4 of the present invention. In Fig. 17, the compatibility of a distributed MLD mode and a conventional MLD mode is supported in this embodiment. Meanwhile, a distributed MLD controller can implement the switching between the distributed MLD mode and the conventional MLD mode for a specific non-AP MLD by periodically collecting link information of AP MLDs.

From the description of the described embodiments, a person skilled in the art may clearly understand that the methods according to the described embodiments may be implemented by software and a necessary universal hardware platform, and definitely may also be implemented by hardware. However, in many cases, the former is a preferred implementation. Based on such understanding, the technical solutions of the present invention essentially or the part contributing to the prior art may be embodied in the form of a software product. The computer software product is stored in a storage medium (such as a ROM/RAM, a magnetic disk, or an optical disk), and includes several instructions for causing a terminal device (which may be a mobile phone, a computer, a server, or a network device) to execute the methods described in the present invention.

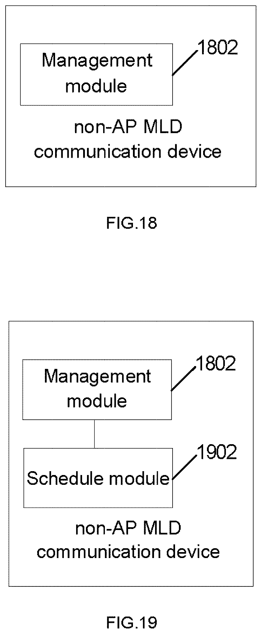

Fig. 18 is a structural block diagram (I) of an alternative non-AP MLD communication device according to an embodiment of the present invention. As shown in Fig. 18, a non-AP MLD communication device includes:
a management module 1802, configured to collect link information of respective links from AP MLDs, wherein the respective links are links between a non-AP MLD and a plurality of AP MLDs;
the management module 1802 is configured to select a target AP MLD from the plurality of AP MLDs according to the link information of respective links, and communicate with the non-AP MLD via the target AP MLD.

According to the described device, a distributed MLD controller collects link information of links between a non-AP MLD and a plurality of AP MLDs from the AP MLDs, selects a target AP MLD from the plurality of AP MLDs according to the link information, and communicates with the non-AP MLD via the target AP MLD. The described device collects link information of links between a non-AP MLD and a plurality of AP MLDs, and then selects an optimal AP MLD from the plurality of AP MLDs in real time according to the link information, and takes the link between said AP MLD and the non-AP MLD as a transmission link, such that the transmission links are adjusted in a non-roaming manner, thereby avoiding the problem of delay caused by the adjustment of the transmission links relying on roaming. Accordingly, the described device can solve the problem in the prior art that a long data communication delay is caused because when AP MLDs communicate with a non-AP MLD, transmission links are adjusted relying on a conventional roaming technology.

In an embodiment, the management module 1802 is further configured to receive a multi-link association request that is forwarded by each AP MLD and sent by the non-AP MLD, wherein the multi-link association request is used to indicate a plurality of links associated with the non-AP MLD; and the distributed MLD controller replies to the multi-link association request with an acceptance message or a rejection message, and when replying with the rejection message, sends recommended multi-link information to the non-AP MLD, so as to instruct the non-AP MLD to re-initiate a multi-link association request according to the multi-link information.

In an embodiment, the management module 1802 is further configured to periodically send a link measurement request to the plurality of AP MLDs; the management module 1802 is further configured to receive the link information of respective links sent by the plurality of AP MLDs based on the link measurement request.

In an embodiment, Fig. 19 is a structural block diagram (II) of an alternative non-AP MLD communication device according to an embodiment of the present invention. As shown in Fig. 19, the non-AP MLD communication device further includes: a schedule module 1902, configured to schedule data, so as to guide the target AP MLD to communicate with the non-AP MLD.

In an embodiment, the schedule module 1902 is further configured to receive a unicast or broadcast discovery request message sent by each AP MLD, and identify the role of each AP MLD; the schedule module 1902 is further configured to reply with or actively send a discovery response based on the discovery request message to announce role information of the distributed MLD controller.

In an embodiment, the schedule module 1902 is further configured to receive a join request message sent by each AP MLD, and collect and maintain multi-link information carried in the join request message; the schedule module 1902 is further configured to reply to the join request message with a join response message acceptance message, or reject each AP MLD from joining a Distributed MLD group.

In an embodiment, the schedule module 1902 is further configured to receive a notification message sent by each AP MLD, and update and maintain multi-link information carried in the notification message.

In an embodiment, the schedule module 1902 is further configured to send a unicast or broadcast configuration request message, wherein the configuration request message carries link information of the plurality of maintained AP MLDs, and request each AP MLD to modify the configuration of each AP MLD according to the link information.

In an embodiment, the schedule module 1902 is further configured to receive data and management messages sent by the AP MLD; and/or the schedule module 1902 is further configured to send data and management messages to each AP MLD.

In an embodiment, the schedule module 1902 is further configured to, upon detection of a change in the link information, perform processing in at least one of the following manners: the distributed MLD controller guides a target sub-STA in the non-AP MLD to roam, so as to implement link switching; and the distributed MLD controller selects a new target AP MLD, so as to guide the new target AP MLD to communicate with the non-AP MLD.

In an embodiment, the described device is configured with a Distributed MLD Service Management function, and each AP MLD is configured with the Distribution MLD Service Management function.

For specific examples in this embodiment, reference may be made to the examples described in the described embodiments and implementations, and details are not repeatedly described in this embodiment.

The present invention further provide an electronic device, comprising a memory and a processor, wherein the memory stores a computer program, and the processor is configured to run the computer program so as to execute the steps in any of the described method embodiments.

Alternatively, in this embodiment, the processor may be configured to execute the following steps via a computer program:
S1: a distributed MLD controller collects link information of respective links from AP MLDs, wherein the respective links are links between a non-AP MLD and a plurality of AP MLDs; and
S2: the distributed MLD controller selects a target AP MLD from the plurality of AP MLDs according to the link information of respective links, and communicates with the non-AP MLD via the target AP MLD.

Alternatively, in another embodiment, the processor may be configured to execute the following steps via computer program:
S1: a distributed MLD controller collects link information of respective links from AP MLDs, wherein the respective links are links between a non-AP MLD and a plurality of AP MLDs; and
S2: the distributed MLD controller selects a target AP MLD from the plurality of AP MLDs according to the link information of respective links, and communicates with the non-AP MLD via the target AP MLD.

In an embodiment, the electronic device may further include a transmission device and an input/output device, wherein the transmission device is connected to the processor, and the input/output device is connected to the processor.

For specific examples in this embodiment, reference may be made to the examples described in the described embodiments and implementations, and details are not repeatedly described in this embodiment.

Obviously, those skilled in the art should understand that respective modules or respective steps in the present invention can be implemented by a universal computing apparatus, and the respective modules or steps can be integrated on a single computing apparatus or distributed over a network formed by a plurality of computing apparatuses, and can be implemented by program codes executable by the computing apparatus, such that the modules or steps can be stored in a storage apparatus and executed by the computing apparatus, and the shown or described steps can be executed in sequences different from those described here in some cases, or the respective modules or steps can be implemented by manufacturing the modules or steps into respective integrated circuit modules respectively, or manufacturing multiple modules or steps among the respective modules or steps into a single integrated circuit module. Thus, the present invention is not limited to any particular combination of hardware and software.

The foregoing descriptions are merely preferred present invention, and are not intended to limit the present invention. For those skilled in the art, the present invention may have respective modifications and variations. Any modifications, equivalent replacements, improvements and the like made within the principle of the present invention shall belong to the scope of protection of the present invention.

## Claims

1. A non-AP MLD communication method, the method comprising:
collecting, by a distributed Multi-Link Device, MLD, controller, link information of respective links from a plurality of Access Point, AP, MLDs, wherein the respective links are links between a non-AP MLD and the plurality of AP MLDs; and
selecting, by the distributed MLD controller, a target AP MLD from the plurality of AP MLDs according to the link information of the respective links, and communicating, by the distributed MLD controller, with the non-AP MLD via the target AP MLD.

2. The method according to claim 1, wherein the method further comprises:
receiving, by the distributed MLD controller, a multi-link association request that is forwarded by the AP MLD (s) and sent by the non-AP MLD, wherein the multi-link association request is used to indicate a plurality of links associated with the non-AP MLD; and
replying, by the distributed MLD controller, the multi-link association request with an acceptance message or a rejection message, and in a case of replying with the rejection message, sending, by the distributed MLD controller, recommended multi-link information to the non-AP MLD, so as to instruct the non-AP MLD to re-initiate a multi-link association request according to the recommended multi-link information.

3. The method according to claim 1, wherein collecting, by a distributed Multi-Link Device ,MLD, controller, link information of respective links from a plurality of Access Point, AP, MLDs comprises:
periodically sending, by the distributed MLD controller periodically, a link measurement request to the plurality of AP MLDs; and
receiving, by the distributed MLD controller, the link information of respective links sent by the plurality of AP MLDs based on the link measurement request.

4. The method according to claim 1, wherein communicating, by the distributed MLD controller, with the non-AP MLD via the target AP MLD comprises:
scheduling data via an MLD traffic schedule module in the distributed MLD controller, so as to guide the target AP MLD to communicate with the non-AP MLD.

5. The method according to claim 1, wherein before collecting, by a distributed Multi-Link Device, MLD, controller, link information of respective links from a plurality of Access Point, AP, MLDs , the method further comprises:
receiving a discovery request message sent by the AP MLD (s) in a unicast or broadcast manner, and identifying a role of the AP MLD; and
replying with or actively sending a discovery response based on the discovery request message to announce role information of the distributed MLD controller.

6. The method according to claim 1, wherein before collecting, by a distributed Multi-Link Device, MLD, controller, link information of respective links from a plurality of Access Point, AP, MLDs , the method further comprises:
receiving a join request message sent by the AP MLD (s), and collecting and maintaining multi-link information carried in the join request message; and
replying to the join request message with a join response message acceptance message, or rejecting the AP MLD from joining a Distributed MLD group.

7. The method according to claim 1, wherein before collecting, by a distributed Multi-Link Device, MLD, controller, link information of respective links from a plurality of Access Point, AP, MLDs , the method further comprises:
receiving a notification message sent by the AP MLD (s), and updating and maintaining multi-link information carried in the notification message.

8. The method according to claim 1, wherein before collecting, by a distributed Multi-Link Device, MLD, controller, link information of respective links from a plurality of Access Point, AP, MLDs , the method further comprises:
sending a configuration request message in a unicast or broadcast manner, wherein the configuration request message carries maintained link information of a plurality of AP MLDs, and requesting the plurality of AP MLDs to modify configuration of the plurality of AP MLDs according to the link information.

9. The method according to claim 1, wherein before collecting, by a distributed Multi-Link Device, MLD, controller, link information of respective links from a plurality of Access Point, AP, MLDs , the method further comprises:
receiving data and management messages sent by the AP MLD (s); and/or sending data and management messages to the AP MLD (s).

10. The method according to claim 1, wherein upon detection of a change in the link information, the method further comprises at least one of the following:
guiding, by the distributed MLD controller, a target sub-Station, STA, in the non-AP MLD to roam, so as to implement link switching; and
selecting, by the distributed MLD controller, a new target AP MLD, so as to guide the new target AP MLD to communicate with the non-AP MLD.

11. The method according to any one of claims 1 to 10, wherein the distributed MLD controller is configured with a Distributed MLD Service Management function, and each AP MLD is configured with the Distribution MLD Service Management function.

12. A non-AP MLD communication apparatus, applied to a distributed MLD controller, comprising:
a management module, configured to collect link information of respective links from AP MLDs, wherein the respective links are links between a non-AP MLD and a plurality of AP MLDs;
the management module, configured to select a target AP MLD from the plurality of AP MLDs according to the link information of respective links, and communicate ,by the distributed MLD controller, with the non-AP MLD via the target AP MLD.

13. A computer-readable storage medium, the storage medium stores a computer program, wherein the computer program is configured to execute the method according to any one of claims 1 to 11 when running.

14. An electronic device, comprising a memory and a processor, wherein the memory stores a computer program, and the processor is configured to run the computer program so as to execute the method according to any one of claims 1 to 11.
